(19) **Europäisches Patentamt European Patent Office Office européen des brevets**

(11) **EP 4 203 386 A1**

(12) **EUROPEAN PATENT APPLICATION**

(43) Date of publication:
**28.06.2023 Bulletin 2023/26**

(21) Application number: **21216601.1**

(22) Date of filing: **21.12.2021**

(51) International Patent Classification (IPC):
**H04L 9/40** (2022.01)      **G06N 20/00** (2019.01)

(52) Cooperative Patent Classification (CPC):
**H04L 63/1425; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
- **Krompaß, Denis 81549 München (DE)**
- **Schober, Alexander 81245 München (DE)**

(74) Representative: **Siemens Patent Attorneys Postfach 22 16 34 80506 München (DE)**

(54) **DECENTRALIZED COMPUTING UNIT**

(57) The invention is directed to Decentralized computing unit (20), wherein the decentralized computing unit is assigned to a respective customer, wherein the decentralized computing unit is configured for:
a. Providing a local customer data set comprising a plurality of data samples; wherein the local customer data set is kept private on the decentralized computing unit; wherein each data sample of the plurality of data samples comprises at least one numerical value representing the data sample;

b. Training a pre-trained local machine learning model for federated learning using a loss function comprising a mapping function based on the local customer data set; wherein the mapping function maps each data sample of the plurality of data samples to a respective feature vector; wherein the mapping function is initialized with at least one initial parameter; and
c. Providing the trained local machine learning model.

Further, the invention relates to a corresponding technical system.

EP 4 203 386 A1

**Description**

1. Technical field

The present invention relates to a decentralized computing unit. Further, the invention relates to a corresponding technical system.

2. Prior art

Currently there is a trend of digitalization in the industry domain. Hence, e.g. a manufacturing process for a product may be digitally controlled. For describing several facets of this trend the term "Industry 4.0" (in German: "Industrie 4.0") is a commonly used term. It has become not only a major part of today's industry, but it also drives the business in many industrial domains. Industrial IOT, automation and safety are essential elements of Industry 4.0.

Considering complex industrial plants, the industrial plants usually comprise distinct components with a multiplicity of individual functions. Exemplary units include sensors and actuators. The units and their functions have to be controlled and regulated in an interacting manner. They are often monitored, controlled and regulated by automation systems. The increasing degree of digitalization allows for e.g. manufacturing or industrial installation of products in a production line of the industrial plant to be performed by robot units or other autonomous units in an automatic manner and thus efficiently.

A reliable and robust operation of the machinery is of importance in such industrial environments since any uncertainty, defect or anomaly often has a negative impact such as a decrease of quality and throughput. Severe anomalies such as sudden failures might even lead to downtimes of the industrial plant and hence increased costs or even personal harms in the worst case.

Artificial Intelligence ("AI") systems, such as machine learning models, offer tremendous potential for today's industry. The AI systems are software programs whose behavior is learned from data instead of being explicitly programmed. The learning process is called "training" which requires plenty of data and significant computational resources. Thereby, the trained AI system solves a specific task for which it was trained, such as prediction of anomalies, referred to a as anomaly detection. Unlike conventional software, the learned behavior of the AI systems highly depends on the data including the parameters used during training, namely training data.

Traditional machine learning usually involves a central server (on-prem or cloud) that hosts the trained Machine Learning model in order to make predictions. The downside is that all the data collected by local devices and sensors are sent back to the central server for processing. Then, the trained Machine Learning model is sent back to the local devices. Hence, in other words, the training data is centralized on server or another other computing device.

Federated learning is a branch of Machine Learning and is increasingly gaining importance. Federated learning concerns scalable and robust privacy preserving distributed Machine Learning. Federated learning is a machine learning technique that trains the current Machine Learning model across multiple decentralized edge devices or servers using local data samples. These locally trained Machine Learning models are sent from the decentralized edge devices back to a central server where they are aggregated, i.e. averaging weights, resulting in a consolidated global Machine Learning model. This consolidated global Machine Learning model is sent to the decentralized edge devices for application or operation. Hence, in contrast to traditional centralized Machine Learning techniques, the local data samples are not uploaded to one central server.

The advantage of Federated Learning is that the raw data is kept private and the participating clients anonymous. Anonymous in the sense that it cannot be reconstructed which client contributed what parts of the shared information.

According to prior art, tailored Machine Learning solutions are developed basically from scratch for every single use case and customer. The development of such a solution can take up to 3 to 12+ month to produce satisfactory results. Hence, the known solutions are time-consuming and error-prone. A major bottleneck in this development is the collection and preparation of sufficient training data for training the Machine Learning models

Until today, no databases with a large collection of historic data for the diverse use cases exist. Moreover, there is also no data available for newly established use cases.

For anomaly detection in general, data collection is even more challenging since anomalous events are scarce and have high variation implying a very long data recording history to cover these anomalies at a sufficient amount. Data preparation, more specifically data labeling and annotation, is also inherently difficult in the industrial domain since it requires specific domain insights.

Another major constraint is that the customers are unwilling to share their data. The reason lies in the fact that the customers in the industrial sector are generally concerned about their data privacy. They fear leakage of company secrets and Intellectual property.

It is therefore an objective of the invention to provide a decentralized computing unit.

3. Summary of the invention

This problem is according to one aspect of the invention solved by a decentralized computing unit, wherein the decentralized computing unit is assigned to a respective customer, wherein the decentralized computing unit is configured for:

a. Providing a local customer data set comprising a plurality of data samples; wherein

the local customer data set is kept private on the decentralized computing unit; wherein

each data sample of the plurality of data samples comprises at least one numerical value representing the data sample;

b. Training a pre-trained local machine learning model for federated learning using a loss function comprising a mapping function based on the local customer data set; wherein

the mapping function maps each data sample of the plurality of data samples to a respective feature vector; wherein

the mapping function is initialized with at least one initial parameter; and

c. Providing the trained local machine learning model.

Accordingly, the invention is directed to a decentralized computing unit. The decentralized computing unit can be equally referred to as decentral computing unit and can be designed as an edge device. The decentralized computing unit is designed as privacy preserving decentralized computing unit.

The decentralized computing unit provides the local customer data set. Thereby, the term "customer" can be equally referred to as client. The local customer data set can be received via one or more input interfaces. The local costumer data set is kept private on the decentralized computing unit. Further, the local costumer data set comprises data samples. Thereby, the data samples comprise numerical values, which represent the data samples. Exemplary data samples are images, text files, time-series, sensor data etc. Referring to images, the numerical features are pixels.

Moreover, the decentralized computing unit trains the pre-trained local machine learning model for federated learning. In other words, the pre-trained local machine learning model is applied on the provided input data, namely the local customer data set. The pre-trained machine learning model comprises a mapping function for transforming the data samples into respective feature vectors. The mapping function is initialized with the initial parameter. Additionally, the pre-trained machine learning model can comprise a projection-function for training the pre-trained machine learning model. The training results in a trained local machine learning model, which is provided as output.

In other words, the concepts of machine learning are combined, enabling federated one-class classification.

The advantage of the present invention is that the local customer data is kept 100% private. Importantly, no subset of the local customer data is consolidated on a server instance to incorporate it in the decision process.

In a first aspect the pre-trained local machine learning model is designed as a local copy of a global machine learning model. Accordingly, the concept of federated learning is utilized, wherein local copies are used on the decentralized computing units.

In another aspect the global machine learning model is an aggregation or consolidation of at least one pre-trained local machine learning model of at least one decentralized computing unit, preferably a plurality of pre-trained local machine learning models, and is shared across the at least one decentralized unit. Accordingly, the concept of federated learning is utilized, wherein the pre-trained local machine learning models of the decentralized computing units are aggregated into the global machine learning model.

In another aspect the at least one initial parameter is initialized randomly or by means of any other initialization method. Accordingly, an initialization is performed. Distinct methods can be utilized for the initialization in a flexible and reliable manner, depending on the user requirements, use caser or other conditions.

In another aspect the loss function is a loss function selected from the group comprising:

- a loss function for unsupervised machine learning, preferably the loss function for unsupervised machine learning is designed as an self-supervised contrastive learning loss function; and

- a loss function for supervised machine learning, preferably the loss function for supervised machine learning is designed as, Contrasting Shifted Instances, CSI, loss function.

Accordingly, the loss function used for training depends on the machine learning approach, which is either unsupervised or supervised machine learning.

In another aspect the selection of the loss function depends on the data samples of the local customer data set, wherein the data samples are unlabelled or labelled. Accordingly, labelled and unlabelled data can be interpreted in the common sense, according to which labeled data is a designation for pieces of data that have been tagged with one or more labels identifying certain properties or characteristics, or classifications or contained objects. Accordingly, the loss function additionally depends on the data samples, in other words, input data, which is either labelled or unlabelled.

In another aspect the pre-trained local machine learning model is a One-Class Classifier, preferably designed as deep neural network, preferably configured for anomaly detection. Accordingly, the pre-trained local machine learning model is according to an embodiment a one-class classifier configured as anomaly detector. The anomaly is preferably related to a technical unit, which is affected by the anomaly or e.g. defect. The technical unit is preferably an industrial plant. Alternatively, the technical unit can be designed as any other technical component, such as robot unit or autonomous car.

In another aspect the decentralized computing unit is further configured for

    a. revising the trained local machine learning model; wherein
    the revision comprises

    - fine-tuning the trained local machine learning model; wherein
      the fine-tuning comprises continuing to train the trained local machine learning model using the loss function utilized for training or another specific loss function, specified for fine-tuning, based on the local customer data set, or

    - Skipping Fine-tuning and Maintaining the trained local machine learning model; and

    b. Providing the trained local machine learning model after revision.

Accordingly, after training the pre-trained local machine learning model, the trained local machine learning model is subsequently revised. The trained local machine learning model is either fine-tuned and the training is hence continued or the trained local machine learning model does not have to be trained any longer and can be provided without fine-tuning.

In another aspect the revision depends on at least one condition, wherein the at least one condition is selected from the group comprising:

the trained local machine learning model, a performance indicator or other requirement of the trained local machine learning model, a property or a characteristic of the decentralized computing unit, a property or a characteristic of the customer, a property or a characteristic of the local customer data set, a distributional shift between a plurality of local customer data sets; a size or a degree of the distributional shift between the plurality of local customer data sets.

Accordingly, the revision depends on a condition or requirement. The revision depends on the condition, e.g. is solely performed in the case that the condition is fulfilled. For example, the condition is the size or the degree of the distributional shift between the plurality of local customer data sets. The revision, in this case, is solely performed in the case that the distributional shift is e.g. small enough etc.

In another aspect the specific loss function is a Mean-Shifted Contrastive Loss, preferably specified for anomaly detection, wherein the Mean-Shifted Contrastive Loss is defined for:

    global fine-tuning, if the size or the degree of the distributional shift is small, or

    local fine-tuning, if the size or the degree of the distributional shift is small is large.

Accordingly, the loss function depends on the aforementioned condition.

In another aspect the decentralized computing unit is further configured for

    applying the trained local machine learning model on a local customer data set comprising at least one data sample, wherein

    the local customer data set is preferably independent from the local customer data set used for training, wherein.

In another aspect the application comprises

classifying the at least one data sample of the local customer data set as normal or anomalous using the trained local machine learning model, wherein

the anomaly is preferably related to a technical unit, which is affected by the anomaly, wherein

the technical unit is preferably an industrial plant, wherein

the trained local machine learning model uses an anomaly score calculation for classification, wherein

the anomaly score indicates a normal or an anomalous state of the at least one data sample, which is assigned to the at least one data sample to classify the at least one data sample as normal or anomalous.

In another aspect the decentralized computing unit is further configured for performing or triggering at least one measure after classifying the at least one data sample as anomalous, wherein
the at least one measure is selected from the group comprising:

- Switching off the technical unit, preferably instead of activating or switching on an emergency stop,

- Activating or switching on the emergency stop,

- Adapting an operating mode of the technical unit, preferably switching the operating mode from a normal mode to an anomalous mode,

- Adapting the control or control unit of the technical unit,

- Transmitting a digital message with the anomaly score, the class, at least one instruction to remedy the anomalous state and/or other information to a user or another computing unit, and

- Displaying the digital message with the anomaly score, the class, the at least one instruction to remedy the anomalous state and/or other information on a display unit to a user or another computing unit.

One or more actions can be performed. The action can be equally referred to as measure. These actions can be performed by the decentralized computing unit. The actions can be performed gradually or simultaneously. The advantage is that appropriate actions can be performed in a timely manner.
For example, counter measures to handle the anomaly can be directly implemented, such as Switching off the technical unit, which is affected by the detected anomaly. Alternatively or additionally, the decentralized computing unit can perform one or more further counter measures.
Another exemplary measure concerns the transmission or display of a digital message associate with the anomaly, e.g. to a user. After transmission or display, the user can confirm or reject the anomaly.
Moreover, the measures can be performed stepwise, e.g. after confirmation of the anomaly by the user, the technical unit is switched of etc.
In another aspect the calculation of the anomaly score depends on the loss function used for training and/or the loss function used for revision.
In another aspect the decentralized computing unit is further configured for transmitting the trained local machine learning model to a central computing unit for generating a global machine learning model based on the at least one trained local machine learning model.
A further aspect of the invention is a technical system, wherein the technical system is designed as federated learning platform with at least one decentralized computing unit according, preferably a plurality of decentralized computing units.

4. Short description of the drawings

In the following detailed description, presently preferred embodiments of the invention are further described with reference to the following figures:

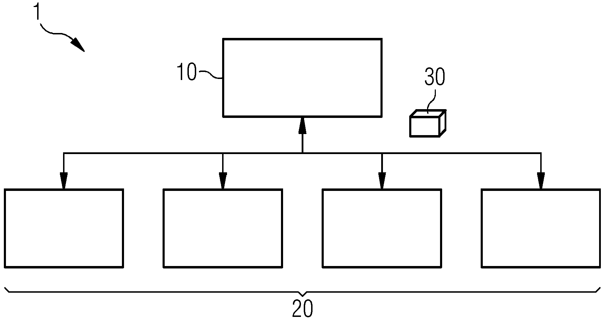

Fig. 1    illustrates a federated learning platform according to an embodiment.

5. Detailed description of preferred embodiments

Figure 1 illustrates a federated learning platform 1 according to an embodiment. The federated learning platform 1 comprises a central computing unit 10 and a plurality of decentralized computing units 20. The central computing unit 10 and the decentralized computing units 20 can exchange data bidirectionally, indicated with the bidirectional arrow.

According to the federated learning platform 1, k customers collaborate in training a machine learning model. The customers can be equally referred to as clients. The training is performed locally on the decentralized computing units 20. The decentralized computing units 20 can be designed as edge devices. The trained machine learning model 30 is then transmitted and shared in order to apply it in the individual context, preferably an industrial setting. Thereby, the advantage of federated learning is that the machine learning model is solely allowed to view the locally available customer data present on each decentralized computing unit 20 to learn from it.

Federated learning prevents the consolidation of the local customer data sets on a central computing unit 10 or any other kind of exposure of the data sets. In other words, the local customer data sets do not leave the customers. Moreover, it is guaranteed that the local customer data sets cannot be reverse engineered from the shared trained machine learning model 30. Hence, the local customer data sets cannot be associated with the origin customer.

Training the pre-trained local machine learning model on the decentralized computing units

The decentralized computing unit 20 trains the pre-trained local machine learning model 30 for federated learning based on the local customer data set as input. Therefore, the pre-trained local machine learning model 20 utilizes a loss function with a mapping function. The data samples of the local customer data set are transformed into feature vectors using the mapping function.

In other words, the local customer data set is raw information presented by the observed data samples, whereas the feature vectors are compressed representations. This transformation can also be described as feature extraction and the features as machine-readable characteristics. Thereby, the feature vectors describe features of the observed data that simplify the automated decision making of the AI system solving a specific task for which it was trained, such as prediction of anomalies, referred to a as anomaly detection.

In case of an image from a street view, the abstract features that represent the state of the present traffic lights are extracted. The feature extraction is applicable on other data types like text or sensor signals.

The data transformation is essential for complex data spaces like images since the anomaly detection based on the raw data often fails.

The machine learning model is pre-trained, according to which initialized and ramped up to a state where it is capable to perform a sufficiently well feature extraction on the local customer data set.

If a compatible pre-trained machine learning model exists, either from e.g. an internal or a public repository, then the pre-training will be skipped. Otherwise, the machine learning model can be learned from the scratch with self-supervision.

The mapping function can be specified as $z_i = f_\theta{}^*(x_i)$, wherein the mapping function is parametrized by $\theta^*$. The mapping function maps each data sample $x_i$ of the local customer data set to a respective latent feature vector $z_i$. The initial parameters of the mapping function $\theta^*$ are shared with all clients $k$ in the federation by a server instance $s$. According to an embodiment, the mapping function $f_\theta{}^*$ is defined by means of a deep neural network. The architecture of the deep neural network matches the requirements of the corresponding local customer data set.

According to an embodiment, the deep neural architecture is designed as a convolutional neural network backbone of a ResNet18 architecture that processes images that have been scaled to 224 x 224 RGB images.

The one or more initial parameters $\theta^*$ of the mapping function can be either initialized by random or by any other reasonable initialization. The projection function $g\omega^*$ which is only present during training of the mapping function $f\theta^*$ is initialized by random or a reasonable initialization. The projection function ca be designed as Deep Neural Network or any other identity function.

Moreover, the central computing unit, such as server or server instance $s$ can trigger a communication round in which the initial parameter of the mapping function $\theta^*$ and the model projection function parameters $\omega^*$ are sent to one or more decentralized units in the federated learning platform. The decentralized units use the optimization of the

CSI loss $\mathcal{L}_{CSI}$ or the unsupervised contrastive loss proposed by the SimCLR $\mathcal{L}_{SimCLR}$. This depends on whether the customer of the decentralized computing unit has agreed to provide a sufficient number of data samples with confirmed normal operation.

Unlabelled data samples:

In case of the SimCLR the loss function for unsupervised machine learning based on the unlabelled data samples, the loss function

$$\mathcal{L}_{SimCLR}(X, \Phi) = \mathcal{L}_{SimCLR_{aug}}\left(\bigcup_{i=0}^{|X|-1}\bigcup_{\phi\sim\Phi}^{2}\phi(x_i)\right) \qquad (1)$$

is minimized, where $\Phi$ is a distribution of pre-selected augmentation functions, which is uniformly sampled twice for every data sample $x_i$ contained in X. The augmentation function is chosen to generate variations that supposedly lie within the generating data distribution of *X*. Further, the loss function $\mathcal{L}_{SimCLR_{aug}}$, which is applied on these augmented data samples *X* is defined as

$$\mathcal{L}_{SimCLR_{aug}}(\tilde{X}) = \frac{1}{|\tilde{X}|}\sum_{i=0}^{\frac{|\tilde{X}|}{2}-1}\mathcal{L}_{con}\left(\tilde{X}, i, i+\frac{|\tilde{X}|}{2}\right) + \mathcal{L}_{con}\left(\tilde{X}, i+\frac{|\tilde{X}|}{2}, i\right) \qquad (2)$$

where the contrastive loss $\mathcal{L}_{con}$ is defined as

$$\mathcal{L}_{con}(X, i, j) = -log\frac{e^{\frac{sim\left(g_{\omega k}\left(f_{\theta k}(x_i)\right), g_{\omega k}\left(f_{\theta k}(x_j)\right)\right)}{\tau}}}{\sum_{u=0}^{|X|-1}\mathbb{1}_{u\neq i}\, e^{\frac{sim\left(g_{\omega k}\left(f_{\theta k}(x_i)\right), g_{\omega k}\left(f_{\theta k}(x_u)\right)\right)}{\tau}}} \qquad (3)$$

where $f_\theta k$ is the local copy of the mapping function $f_\theta^*$ and $g_\omega k$ is the local copy of the projection function $g_\omega^*$ at customer *k,* respectively, where *sim* is the cosine similarity, where $\tau$ controls the entropy of the computed probability distribution and $\mathbb{1}$ is the indicator function.

Labelled data samples:

In case of the CSI loss function for supervised machine learning based on the labelled data samples, the following loss function

$$\mathcal{L}_{CSI}(X, \Psi, \Phi) = \sum_{j=0}^{|\Psi|-1}\mathcal{L}_{CSI_{aug}}\left(\bigcup_{i=0}^{|X|-1}\bigcup_{\phi\sim\Phi}^{2}\phi(\psi(x_i)), \Psi, j\right) \qquad (4)$$

is minimized, where $\Psi$ and $\Phi$ are sets of pre-selected augmentation functions, where $\Psi$ is uniformly sampled twice for every data sample $x_i$ contained in X after a selected "shifting" augmentation function from $\Psi$ is applied. The intuition on how to select the set of augmentation functions for $\Phi$ follows the same logic as in the loss function $\mathcal{L}_{SimCLR}$. The augmentation functions are chosen that generate variations of the data samples that supposedly lie outside of the data generating distribution of X for the shifting augmentation functions, which are selected for $\Psi$. Further, the CSI loss function $\mathcal{L}_{CSI_{aug}}$ applied on these augmented data samples $\tilde{X}_{\psi j}$ is defined as

$$\mathcal{L}_{CSI_{aug}}\left(\tilde{X}_{\psi_j}, \Psi, j\right) = \mathcal{L}_{SimCLR_{aug}}\left(\tilde{X}_{\psi_j}\right) + \lambda \cdot \mathcal{L}_{cls_{\Psi}}\left(\tilde{X}_{\psi_j}, \Psi, j\right) \qquad (5)$$

where $\mathcal{L}_{SimCLR_{aug}}$ is defined in equation 2, where $\lambda$ is a weighting factor chosen prior to training and where $\mathcal{L}_{cls_{\Psi}}$ measures the error on classifying which shifting augmentation function of $\Psi$ has been applied to the passed data samples $\tilde{X}_{\psi_j}$ and is defined as

$$\mathcal{L}_{cls_{\Psi}}\left(\tilde{X}_{\psi_j}, \Psi, j\right) = \frac{1}{\left|\tilde{X}_{\psi_j}\right|} \sum_{i=0}^{\left|\tilde{X}_{\psi_j}\right|-1} -log\left[\sigma\left(q_{\xi^k}\left(f_{\theta^k}\left(\psi_j(\tilde{x}_j)\right)\right)\right)\right]_j \qquad (6)$$

where $f_{\theta k}$ is the local copy of the mapping function $f_\theta{}^*$ at customer k. Additionally to the mapping function $f_\theta{}^*$, the neural network $q_\xi{}^*$ is learned and shared via federated learning, where $q_{\xi k}$ denotes a local copy of the neural network at customer k. $\sigma$ is the softmax function that maps the produced unbounded outputs to a probabilistic simplex.

The training of the pre-trained local machine learning model on the decentralized computing units results in the trained local machine learning model as output. The trained local machine learning model is revised according to an embodiment.

Revising the trained local machine learning model

The trained local machine learning model is revised and hence improved.

The options for revision are listed in the following. The revision option can depend on e.g. characteristics of the participating customers and/or the properties of the locally observed data in the context of the federated learning.

Option 1:

According to option 1, no fine-tuning is performed. In other words, the revision is not necessary and the trained machine learning model is not further trained. The trained local machine learning model is provided. Additionally, the collaboration between the customers can be paused or stopped.

Option 2:

The loss functions used for training are used for fine-tuning and continued training (optimizing equation 1 or equation 4).

The schedule for updating the trained local machine learning model might differ to the pre-training phase. This can be determined by the maturity of the trained local machine learning model and/or the targeted application.

Option 3:

This option has proven to be advantageous in the case that the distributional shift of the customer data sets is small. This means that it can be expected that one global machine learning model can be learned, preferably as an anomaly detector, for all customers at once. In other words, the representations extracted via the mapping function of normal condition data are sufficiently similar between the customers.

The trained local machine learning model is fine-tuned by minimizing the Mean-Shifted Contrastive Loss $\mathcal{L}_{MSC}$ on normal condition data X defined as:

$$\mathcal{L}_{MSC}(X, \Phi) = \mathcal{L}_{SimCLR_{aug}}\left(\bigcup_{i=0}^{|X|-1}\bigcup_{\phi\sim\Phi}^{2}\phi(x_i)\right) + \gamma \cdot \mathcal{L}_{angular}(X) \qquad (7)$$

Where the projection functions $g_{\omega k}$ are replaced by the mean shifting projection $\pi$

$$\pi(z) = \rho(\rho(z) - c) \ and \ with \ \rho(z) = \frac{z}{\|z\|_2}$$

and the angular loss $\mathcal{L}_{angular}$ as

$$\mathcal{L}_{angular}(X) = -\frac{1}{X} \sum_{i=0}^{|X-1|} \rho\left(f_{\theta^k}(x_i)\right) \cdot c$$

where the center of the normalized representation of the normal condition data $c$ is given by

$$c = \rho\left(\frac{1}{\sum_{k=0}^{K-1} n_k} \sum_{k=0}^{K-1} \sum_{i=0}^{n_k-1} \rho\left(f_{\theta^k}(x_i)\right)\right) \qquad (8)$$

Thereby, the center of the normalized representations of the normal condition data is computed across all customers. This computation can be aggregated with the secure aggregation protocol. The secure aggregation protocol advantageously assures privacy for each customer.

First, each customer can compute the sum of its normalized representations in equation 8 and the number of normal examples and encrypt them via secure aggregation, as follows:

$$u_k = enc(n_k) \ and \ z_k = enc\left(\sum_{i=0}^{n_k-1} \rho\left(f_{\theta^k}(x_i)\right)\right)$$

The central computing unit 10 can simply sum the encrypted messages to get the normalized center of the feature representations of the normal condition data, as follows

$$c = \rho\left(\frac{1}{\sum_{k=0}^{K-1} u_k} \sum_{k=0}^{K-1} z_k\right) \cdot$$

The center of the normalized representation of the normal condition data c can then be distributed to the customers again to use it in equation 7 to perform the optimization. This step can be performed in the beginning of the communication round before the optimization of the feature extractor $f_{\theta k}$ is started on each decentralized computing unit. At the end of the communication round, the initial parameter of the fine-tuned trained machine learning model is sent from the decentralized computing unit to the central computing unit via secure aggregation.

Option 4:
This option has proven to be advantageous in the case that the sharing of the summed normalized representations of the normal condition data is forbidden or the distributional shift between the local customer data sets is too large.

According to this advantageous option, the trained machine learning model is only fine-tuned locally. Therefore, the projection $\pi$ in equation 7 is replaced by the projection $\pi'$ defined as

$$\pi'(x) = \rho\left(\rho\left(f_{\theta^k}(x)\right) - c_k\right)$$

and the angular loss term $\mathcal{L}_{angular}$ by

$$\mathcal{L}'_{angular}(X) = -\frac{1}{X} \sum_{i=0}^{|X-1|} \rho\left(f_{\theta^k}(x_i)\right) \cdot c_k$$

where the local center of the normalized representations of the normal condition data $c_k$ of customer k is given by

$$c_k = \rho\left(\frac{1}{n_k} \sum_{i=0}^{n_k-1} \rho\left(f_{\theta^k}(x_i)\right)\right)$$

The fine-tuning can be performed with every communication round. However, the trained local machine learning model can still be globally improved by optimizing a copy of $f_{\theta k}$ via federated learning, as described in option 2.

Option 5:

This option is a special case of option 4. According to this advantageous option, the parallel optimization of the trained local machine learning model via federated learning is omitted. This means that the trained local machine learning model stays constant and the cooperation between the customers is paused or stopped. The fine-tuning can then be continued from the most recent state of $f_{\theta k}$ and $g_{\omega k}$ with the currently available normal condition data.

Anomaly score calculation

According to an embodiment, a threshold for the computed anomaly score is determined to decide whether a local observation made on each customer should be classified as normal or anomalous. The calculation is performed locally on the decentralized computing units. This can be achieved either based on trial and error or if a labeled dataset consisting of anomalies and normal data samples exists via Platt Scaling.

The anomaly scores can be differentiated depending on the loss functions utilized for training and/or fine-tuning:

Option 1: Training with $\mathcal{L}_{SimCLR}$ and Fine-tuning Options 1, 2:

In the case that the local machine learning model has been trained via contrastive learning using equation 1, then the anomaly score function $\mathcal{S}_{con}$ of an observed data sample $x_k$ at customer k is defined as

$$\mathcal{S}_{con}(x_k, Y) = \max_m sim\left(f_{\theta^k}(y_m), f_{\theta^k}(x_k)\right) \cdot \left\| f_{\theta^k}(x_k)\right\| \qquad (9)$$

The anomaly score function measures the cosine similarity to the closest normal condition example scaled by the distance to the origin. The anomaly score assigns larger values to normal data samples and smaller values to anomalous data samples.

Option 1: Training with $\mathcal{L}_{CSI}$ and Fine-tuning Options 1, 2:

In the case the local machine learning model has been trained via CSI using equation 4, then the anomaly score function $\mathcal{S}_{CSI}$ of an observed data sample $x_k$ at customer k is defined as

$$\mathcal{S}_{CSI}(x_k, Y, \Psi) = \frac{1}{|\Psi|} \sum_{j=0}^{|\Psi|-1} \mathcal{S}_{con}\left(\psi_j(x_k), \psi_j(Y)\right) + \beta \cdot \frac{1}{|\Psi|} \sum_{j=0}^{|\Psi|-1} \left[g_{\xi^k}\left(f_{\theta^k}\left(\psi_j(x_k)\right)\right)\right]_j$$

where the first term measures the expectation of equation 9 over the shifting transformations applied when training the local machine learning model by minimizing equation 4. The second term measures how the shifting transformations can be recognized when applied on the observed data sample $x_k$ and is weighted by the hyperparameter $\beta$, which can be chosen beforehand.

The intuition here is that by optimizing equation 4 also structure of the subspaces induced by the shifting transformations is learned in which true anomalies will also be anomalous to normal data samples that have been shifted by these transformations. As in equation 9, this anomaly score assigns larger values to normal data samples and smaller values to anomalous examples.

Fine-tuning options 3, 4, 5:

In the case the local machine learning model has been fine-tuned using the Mean-Shifted Contrastive Loss (Equation 7), then the anomaly score function $\mathcal{S}_{angular}$ of an observed data sample $x_k$ at customer k is defined as

$$\mathcal{S}_{angular}(x_k) = \sum_{\rho\left(f_{\theta^k}(y)\right) \in N_k(x_k)} 1 - sim\left(f_{\theta^k}(y), f_{\theta^k}(x_k)\right) \qquad (10)$$

where $N_k(X_k)$ is n nearest normal data samples accessible on customer k in the normalized latent feature space spanned by $f_{\theta k}$. The anomaly score measures the angular distance of the observed data example $x_k$ to these n nearest normal data examples in the said latent feature space and sums then. Thereby, n is a hyperparameter chosen prior to the computation of the anomaly score. The greater that value, the more anomalous the data sample is.

Pre-Trained machine learning model without fine-tuning (Option 1):

In the case that an already existing trained machine learning model is present, which is not further adapted after training via federated learning, the way this model has been trained is considered. If it the local machine learning model was trained via contrastive learning, then equation 9 will be applied otherwise equation 10 will be applied for computing the anomaly score.

Use Cases:

Automated image-based quality control on bakery products transported on a conveyor belt such as pretzels where an installed camera is recording images of the manufactured product. According to this use case, multiple industrial bakeries store the recorded images in their individual databases to which the locally installed system has access. A copy of the latest version of the mapping function, which is rolled out by the central server, is applied on the feed of images from the local conveyor belt to perform the anomaly detection which in case of a detected anomaly can trigger a manual or automatic separation of the recorded product for manual inspection or removal.

**Claims**

1.  Decentralized computing unit (20), wherein

    the decentralized computing unit (20) is assigned to a respective customer, wherein
    the decentralized computing unit (20) is configured for:

    a. Providing a local customer data set comprising a plurality of data samples; wherein

    the local customer data set is kept private on the decentralized computing unit (20); wherein
    each data sample of the plurality of data samples comprises at least one numerical value representing the data sample;

    b. Training a pre-trained local machine learning model (30) for federated learning using a loss function comprising a mapping function based on the local customer data set; wherein

    the mapping function maps each data sample of the plurality of data samples to a respective feature vector; wherein
    the mapping function is initialized with at least one initial parameter; and

    c. Providing the trained local machine learning model (30) .

2.  Decentralized computing unit (20) according to claim 1, wherein the pre-trained local machine learning model (30) is designed as a local copy of a global machine learning model.

3.  Decentralized computing unit (20) according to claim 1 or claim 2, wherein the global machine learning model is an aggregation or consolidation of at least one pre-trained local machine learning model (30) of at least one decentralized computing unit (20), preferably a plurality of pre-trained local machine learning models (30), and is shared across the at least one decentralized unit (20).

4. Decentralized computing unit (20) according to any of the preceding claims, wherein the at least one initial parameter is initialized randomly or by means of any other initialization method.

5. Decentralized computing unit (20) according to any of the preceding claims, wherein the loss function is a loss function selected from the group comprising:

   - a loss function for unsupervised machine learning, preferably the loss function for unsupervised machine learning is designed as a self-supervised contrastive learning loss function; and
   - a loss function for supervised machine learning, preferably the loss function for supervised machine learning is designed as, Contrasting Shifted Instances, CSI, loss function.

6. Decentralized computing unit (20) according to any of the preceding claims, wherein the selection of the loss function depends on the data samples of the local customer data set, wherein
   the data samples are unlabelled or labelled.

7. Decentralized computing unit (20) according to any of the preceding claims, wherein the pre-trained local machine learning model is a One-Class Classifier, preferably designed as deep neural network, preferably configured for anomaly detection.

8. Decentralized computing unit (20) according to any of the preceding claims, further configured for

   a. revising the trained local machine learning model (30); wherein
   the revision comprises

      - fine-tuning the trained local machine learning (30) model; wherein
      the fine-tuning comprises continuing to train the trained local machine learning model (30) using the loss function utilized for training or another specific loss function, specified for fine-tuning, based on the local customer data set, or
      - Skipping Fine-tuning and Maintaining the trained local machine learning model (30); and

   b. Providing the trained local machine learning model (30) after revision.

9. Decentralized computing unit (20) according to claim 8, wherein the revision depends on at least one condition, wherein the at least one condition is selected from the group comprising:
   the trained local machine learning model (30), a performance indicator or other requirement of the trained local machine learning model (30), a property or a characteristic of the decentralized computing unit (20), a property or a characteristic of the customer, a property or a characteristic of the local customer data set, a distributional shift between a plurality of local customer data sets; a size or a degree of the distributional shift between the plurality of local customer data sets.

10. Decentralized computing unit (20) according to claim 9, wherein the specific loss function is a Mean-Shifted Contrastive Loss, preferably specified for anomaly detection, wherein
    the Mean-Shifted Contrastive Loss is defined for:

    global fine-tuning, if the size or the degree of the distributional shift is small, or
    local fine-tuning, if the size or the degree of the distributional shift is small is large.

11. Decentralized computing unit (20) according to any of the preceding claims, further configured for

    applying the trained local machine learning model (30) on a local customer data set comprising at least one data sample, wherein
    the local customer data set is preferably independent from the local customer data set used for training, wherein.

12. Decentralized computing unit (20) according to claim 11, wherein the application comprises

classifying the at least one data sample of the local customer data set as normal or anomalous using the trained local machine learning model (30), wherein
the anomaly is preferably related to a technical unit, which is affected by the anomaly, wherein
the technical unit is preferably an industrial plant, wherein
the trained local machine learning model (30) uses an anomaly score calculation for classification, wherein
the anomaly score indicates a normal or an anomalous state of the at least one data sample, which is assigned to the at least one data sample to classify the at least one data sample as normal or anomalous.

13. Decentralized computing unit (20) according to claim 12, wherein the decentralized computing unit (20) is further configured for performing or triggering at least one measure after classifying the at least one data sample as anomalous, wherein
the at least one measure is selected from the group comprising:

- Switching off the technical unit, preferably instead of activating or switching on an emergency stop,
- Activating or switching on the emergency stop,
- Adapting an operating mode of the technical unit, preferably switching the operating mode from a normal mode to an anomalous mode,
- Adapting the control or control unit of the technical unit,
- Transmitting a digital message with the anomaly score, the class, at least one instruction to remedy the anomalous state and/or other information to a user or a computing unit, and
- Displaying the digital message with the anomaly score, the class, the at least one instruction to remedy the anomalous state and/or other information on a display unit to a user or a computing unit.

14. Decentralized computing unit (20) according to claim 12, wherein the calculation of the anomaly score depends on the loss function used for training and/or the loss function used for revision.

15. Decentralized computing unit (20) according to any of the preceding claims, further configured for transmitting the trained local machine learning model (30) to a central computing unit (10) for generating a global machine learning model based on the at least one trained local machine learning model (30).

16. A technical system (1), wherein the technical system (1) is designed as federated learning platform (1) with at least one decentralized computing unit (20) according to any of the preceding claims, preferably a plurality of decentralized computing units (20).

17. Technical system (1) according to claim 16, further comprising a central computing unit (10), configured for

- receiving at least one trained local machine learning model (30) from the at least one decentralized computing unit (20);
- generating a global machine learning model based on the at least one pre-trained local machine learning model (30), wherein
the generation comprises aggregating or consolidating the at least one pre-trained local machine learning model (30); and
- transmitting the global machine learning model to the at least one decentralized computing unit (20).

Europäisches
Patentamt

European
Patent Office

Office européen
des brevets

# EUROPEAN SEARCH REPORT

Application Number

EP 21 21 6601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Anonymous: "Google AI Blog: Federated Learning: Collaborative Machine Learning without Centralized Training Data", , 6 April 2017 (2017-04-06), XP055517417, Retrieved from the Internet: URL:https://ai.googleblog.com/2017/04/federated-learning-collaborative.html [retrieved on 2018-10-19] * the whole document * | 1-17 | INV. H04L9/40 G06N20/00 |
| Y | WANG SHIQIANG ET AL: "Adaptive Federated Learning in Resource Constrained Edge Computing Systems", IEEE JOURNAL ON SELECTED AREAS IN COMMUNICATIONS, IEEE SERVICE CENTER, PISCATAWAY, US, vol. 37, no. 6, 1 June 2019 (2019-06-01), pages 1205-1221, XP011724549, ISSN: 0733-8716, DOI: 10.1109/JSAC.2019.2904348 [retrieved on 2019-05-15] * abstract * * page 1205, column 1 - page 1208, column 1 * | 1-17 | |
| A | CN 113 536 667 A (TONGDUN TECH CO LTD; TONGDUN HOLDINGS CO LTD) 22 October 2021 (2021-10-22) * paragraph [0001] * * paragraph [0036] - paragraph [0038] * * paragraph [0043] - paragraph [0044] * * paragraph [0062] * * paragraph [0064] * * paragraph [0066] - paragraph [0067] * | 1-17 | TECHNICAL FIELDS SEARCHED (IPC) G06N H04L |

The present search report has been drawn up for all claims

| Place of search | Date of completion of the search | Examiner |
|---|---|---|
| Munich | 10 May 2022 | Bharucha, Zubin |

EPO FORM 1503 03.82 (P04C01)

## ANNEX TO THE EUROPEAN SEARCH REPORT
## ON EUROPEAN PATENT APPLICATION NO.

EP 21 21 6601

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2022

| Patent document cited in search report | Publication date | Patent family member(s) | Publication date |
|---|---|---|---|
| CN 113536667 A | 22-10-2021 | NONE | |

For more details about this annex : see Official Journal of the European Patent Office, No. 12/82